# EUROPÄISCHE PATENTSCHRIFT

(11) **EP 3 024 700 B1**
(45) Veröffentlichungstag und Bekanntmachung des Hinweises auf die Patenterteilung: **02.05.2018**
(21) Anmeldenummer: 14736718.9
(22) Anmeldetag: 01.07.2014
(51) Int. Cl.: B60R 1/00

(54) **VERFAHREN UND VORRICHTUNG ZUR WIEDERGABE EINES SEITLICHEN UND/ODER RÜCKWÄRTIGEN UMGEBUNGSBEREICHS EINES FAHRZEUGS**
METHOD AND DEVICE FOR REPRODUCING A LATERAL AND/OR REAR SURROUNDING AREA OF A VEHICLE
PROCÉDÉ ET DISPOSITIF PERMETTANT DE REPRODUIRE UNE ZONE LATÉRALE ET/OU ARRIÈRE ENVIRONNANT UN VÉHICULE

(30) Priorität: 23.07.2013 DE 102013214368
(43) Veröffentlichungstag der Anmeldung: 01.06.2016
(73) Patentinhaber: Application Solutions (Electronics and Vision) Limited, Lewes, East Sussex BN7 2 AQ (GB)
(72) Erfinder: SCHREPFER, Jörg, 96355 Tettau (DE)
(74) Vertreter: Büchner, Jörg
(86) Internationale Anmeldenummer: PCT/EP2014/063960
(87) Internationale Veröffentlichungsnummer: WO 2015/010861

(56) Entgegenhaltungen:
- DE-A1- 10 037 128
- DE-A1-102006 037 600
- DE-A1-102008 030 104
- DE-A1-102010 026 222

## Beschreibung

Die Erfindung betrifft ein Verfahren und eine Vorrichtung zur Wiedergabe eines seitlichen und/oder rückwärtigen Umgebungsbereichs eines Fahrzeugs, insbesondere mittels wenigstens einer Bildaufnahmeeinrichtung und wenigstens einer Bildwiedergabeeinrichtung, sowie insbesondere als Spiegelersatz.

Fahrzeuge, wie Personen- und Lastkraftwagen, werden serienmäßig mit Außen- und Innenspiegeln ausgestattet, die auch als Seiten- und Rückspiegel bezeichnet werden. Die Spiegel dienen dem Fahrzeugführer zur Beobachtung des seitlichen und rückwärtigen Umgebungsbereichs des Fahrzeugs, beispielsweise beim Rückwärtsfahren, Einparken, bei einem Spurwechsel oder beim Abbiegen.

Es wurde bereits erkannt, dass die derzeit eingesetzten Außen- und Innenspiegel verschiedene Nachteile haben. Die Spiegel bieten dem Fahrzeugführer meist nur einen sehr begrenzten Blickwinkel auf die Fahrzeugumgebung. Sogenannte "Tote Winkel" können nur über zusätzliche oder asphärische Spiegel kompensiert werden. Bei Dunkelheit sind die bekannten Außen- und Innenspiegel nur schlecht oder gar nicht verwendbar. Weiterhin kann es zu Blendungseffekten kommen, beispielweise durch die Frontscheinwerfer eines nachfolgenden Fahrzeugs. Ein weiterer Nachteil ist die Tatsache, dass der Fahrzeugführer jedes Mal kurzzeitig vom Verkehrsgeschehen abgelenkt ist, wenn sich die Augen des Fahrzeugführers bei einem Blickwechsel auf einen der Spiegel auf die verändert Objektektfernungen einstellen müssen, d.h. während der sogenannten Akkommodation der Augen. Als weiterer wesentlicher Nachteil von Außenspiegeln ist zudem deren negativer Einfluss auf das Design und die aerodynamischen Eigenschaften des Fahrzeugs, insbesondere auf dessen Strömungswiderstand, zu nennen.

Aufgrund der verschiedenen Nachteile der bekannten Außen- und Innenspiegel existieren bereits Ansätze, welche die Spiegel durch ein System ersetzen, das eine oder mehrere Bildaufnahmeeinrichtungen umfasst, insbesondere Kameras, die den seitlichen und/oder rückwärtigen Umgebungsbereich des Fahrzeugs erfassen und Bilddaten des entsprechenden Bereichs erzeugen, sowie eine oder mehrere Bildwiedergabeeinrichtungen, beispielsweise Anzeigebildschirme, wobei die Bildwiedergabeeinrichtungen im Sichtbereich des Fahrzeugführers angeordnet sind und die von den Bildaufnahmeeinrichtung erzeugten Bilddaten laufend wiedergeben. Die Bildaufnahmeeinrichtungen sind in der Regel jeweils auf der linken und rechten Seite im Außenbereich des Fahrzeugs angeordnet, beispielsweise im Bereich der A-Säule mit Blickrichtung nach hinten. Die Bildwiedergabeeinrichtungen sind meist im Fahrzeuginnenraum angeordnet, ebenfalls jeweils im Bereich der A-Säule im Sichtbereich des Fahrzeugführers.

Die DE 10 2007 044 536 A1 zeigt eine solche Lösung, insbesondere zum Überwachen der seitlichen und/oder rückwärtigen Umgebung eines Fahrzeugs, aufweisend Aufnahmemittel zur Aufnahme eines Bildstroms, der Bilder zumindest eines Teils der Umgebung des Fahrzeugs beinhaltet, aufweisend eine Anzeigeeinheit zur Wiedergabe zumindest eines Bildausschnitts des Bildstroms im Fahrzeuginneren und aufweisend Mittel zur selbsttätigen Veränderung des durch die Wiedergabe des Bildausschnitts mittels der Anzeigeeinheit dargestellten Umgebungsausschnitts. Die Lösung umfasst ferner Mittel zur Bestimmung zumindest, einer früheren Position des Fahrzeugs, wobei der Umgebungsausschnitt selbsttätig in Abhängigkeit von der früheren Position des Fahrzeugs anpassbar ist.

Die DE 10 2007 044 536 A1 offenbart somit eine Lösung zur intelligenten und situationsgerechten Anpassung des dargestellten Ausschnitts der Fahrzeugumgebung, der durch die Anzeigeeinheit dargestellt wird. Jedoch offenbart das Dokument keine zufriedenstellende Lösung für Fahrzeuge mit Anhängern, insbesondere nicht für Nutzfahrzeuge, wie beispielsweise Lastkraftwagen.

Die DE 10 2010 026 222 A1 offenbart ein Verfahren zur Fahrerunterstützung beim Fahren und/oder Rangieren, bei dem Umgebungsbereiche des Fahrzeugs erfasst werden und Orientierungshilfen in Abhängigkeit von den erfassten Umgebungsbereichen zumindest optisch ausgegeben werden. Die DE 10 2010 026 222 A1 entspricht dem Oberbegriff der Ansprüche 1 und 4.

Bei Systemen, welche den linken und rechten Außenspiegel jeweils durch Aufnahmemittel und eine Anzeigeeinheit ersetzen, beispielsweise vorkommen, kann es beispielsweise vorkommen, dass ab einem bestimmten Kurvenradius auf einer Seite nur noch der Anhänger des Fahrzeugs im angezeigten Bildausschnitt zu sehen ist, d.h. die Fahrzeugumgebung ist im Bild durch die seitliche Front des Anhängers teilweise oder vollständig verdeckt, und dass auf der gegenüberliegenden Seite ein Bild der Fahrzeugumgebung angezeigt wird, ohne dass darin der Anhänger des Fahrzeugs sichtbar ist. In einem solchen Fall ist es für den Fahrzeugführer schwierig, den Fahrzeugumgebung hinreichend zu überwachen und die Position des Anhängers in der Fahrzeugumgebung richtig zu beurteilen. Die Durchführung insbesondere komplexer Fahrmanöver mit einem Anhänger ist somit erschwert.

Um bei Fahrzeugen mit Anhängern sicherzustellen, dass der Fahrzeugführer auch bei unterschiedlicher Ausrichtungen des Anhängers zum Fahrzeug, d.h. bei unterschiedlichen Winkeln der Fahrzeuglängsachse zur Anhängerlängsachse, das Fahrzeugumfeld jederzeit hinreichend überwachen kann, wird in einer ISO-Norm (International Organization for Standardization), insbesondere ein der ISO 16505 in Verbindung mit der ECE-R46 (Regulation No 46 of the Economic Commission for Europe of the United Nations (UN/ECE)) ein bestimmtes Sichtfeld definiert, das auch "Field of vision of Class IV wide-angle mirrors" bezeichnet wird, welches gleichermaßen, d.h. mit Fahrzeugspiegeln oder mit einem kamerabasierten Spiegelersatzsystem, für den Fahrzeugführer jederzeit einsehbar sein muss.

Bei den bekannten Fahrzeugspiegeln wird die Abdeckung des vorgeschriebenen "Class IV" Sichtfeldes dadurch erreicht, dass der Fahrzeugführer seinen Kopf frei bewegen kann und dadurch in der Lage ist, dass erforderliche Sichtfeld über einen verhältnismäßig kleinen Spiegel einzusehen. Bei den nunmehr vorgeschlagenen Spiegelersatzsystemen, die mit Kameras und Bildschirmen arbeiten, kann das entsprechende Sichtfeld bislang nur durch entsprechend hohe Auflösungen bzw. mit großen Erfassungswinkeln der Kameras und durch entsprechend große Displays im Fahrzeuginnenraum kompensiert werden. für einen Bildschirm, der den rechten Außenspiegel ersetzten soll und der bei einem Fahrzeug, in dem das Lenkrad auf der linken Fahrzeugseite angeordnet ist, in einem Abstand von bis zu 2 Metern vom Fahrzeugführer entfernt angeordnet sein kann, wäre beispielsweise ein Durchmesser von mindestens 32 Zoll erforderlich, um das entsprechende Sichtfeld abzudecken. Das steht Kosten- und Platzsparzielen entgegen und beeinflusst das Design des Fahrzeuginnenraums erheblich.

Es ist daher eine Aufgabe der Erfindung, eine Lösung für Fahrzeuge mit Anhängern anzugeben, mit einer verbesserten Festlegung des durch die Bildwiedergabeeinrichtung dargestellten Bildausschnitts der Fahrzeugumgebung. Es soll insbesondere bei verhältnismäßig geringem Aufwand, beispielweise bei geringer Bildschirmgröße, ein ausreichend großes Sichtfeld auf die seitliche und/oder rückwärtige Fahrzeugumgebung gegeben werden.

Diese Aufgabe wird durch ein Verfahren mit den Merkmalen nach Anspruch 1 sowie durch eine Vorrichtung mit den Merkmalen nach Anspruch 4 gelöst. Vorteilhafte Ausgestaltungen und Weiterbildungen sind Gegenstand, von Unteransprüchen, wobei auch Kombinationen und Weiterbildungen einzelner Merkmale miteinander denkbar sind.

Ein wesentlicher Gedanke der Erfindung besteht darin, die Wiedergabe bzw. die Darstellung des Umgebungsbereich, insbesondere den dargestellten Bildausschnitts der seitlichen und/oder rückwärtigen Fahrzeugumgebung, an eine ermittelte Ausrichtung des Fahrzeuganhängers anzupassen. Die Ausrichtung des Anhängers wird dabei vorzugsweise kontinuierlich während der Fahrt und/oder in bestimmten Fahrsituationen ermittelt. Beispielsweise kann fortlaufend der Winkel der Längsachse des Anhängers zur Längsachse des Fahrzeugs ermittelt werden. Die Anpassung kann, insbesondere bei bekanntem Winkel sowie bei bekannter Länge und Breite des Anhängers, derart erfolgen, dass das im dargestellten Bildausschnitt gezeigte Bild des Umgebungsbereichs des Fahrzeugs möglichst nicht oder möglichst wenig durch den Anhänger des Fahrzeugs verdeckt ist. Die Anpassung erfolgt insbesondere durch Auswahl eines entsprechend Bildausschnittes aus einem Gesamtbild, durch Änderung des Abbildungsmaßstabes und/oder durch Änderung der Bildauflösung.

Gemäß einem ersten Aspekt der Erfindung erfolgt die Anpassung des dargestellten Bildausschnitts dabei derart, dass die Fahrzeugumgebung in dem bei der Widergabe der Bilddaten dargestellten Bildausschnitt nicht durch den Anhänger verdeckt ist.

Gemäß einem zweiten Aspekt der Erfindung erfolgt die Anpassung des dargestellten Bildausschnitts derart, dass der Anhänger und/oder ein hinteres Ende des Anhängers nur in einem definierten Randbereich des dargestellten Bildausschnitts angezeigt wird.

Die erfindungsgemäße Lösung kann insbesondere für Systeme eingesetzt werden, welche den linken und rechten Seitenspiegel jeweils durch Bildaufnahme- und Bildwiedergabemittel ersetzen. Dadurch hat der Fahrzeugführer zu jeder Zeit, insbesondere bei unterschiedlichen Ausrichtungen des Anhängers, beispielsweise bei Kurvenfahrten oder beim Rückwärtsrangieren, eine hinreichenden Blick auf die seitliche und/oder rückwärtige Fahrzeugumgebung.

Das erfindungsgemäße Verfahren dient zur Erfassung bzw. zur Wiedergabe eines seitlichen und/oder rückwärtigen Umgebungsbereichs eines Fahrzeugs, insbesondere zur Beobachtung bzw. Überwachung des Umgebungsbereichs durch einen Fahrzeugführer. Bei dem seitlichen und/oder rückwärtigen Umgebungsbereich handelt es sich dabei zumindest um einen Teilbereich des auf der linken oder rechten Seite befindlichen Bereichs der Fahrzeugumgebung, welcher für einen Fahrzeugführer bislang mit den serienmäßig in Fahrzeugen eingesetzten Seiten- bzw. Außenspiegeln einsehbar ist. Bei dem seitlichen und/oder rückwärtigen Umgebungsbereich handelt es sich insbesondere um zumindest einen Teil des Sichtfelds, das in der ECE-R46 definiert ist und als "Field of vision of Class IV wide-angle mirrors" bezeichneten wird. Das Verfahren kann insbesondere .bei Spiegelersatzsystemen für Nutzfahrzeuge, wie Lastkraftwagen oder auch bei Personenkraftwagen, die mit Anhängern ausgestattet sind, eingesetzt werden.

Im Rahmen des erfindungsgemäßen Verfahrens wird mittels wenigstens einer Bildaufnahmeeinrichtung der entsprechende Umgebungsbereich des Fahrzeugs erfasst, d.h. der Umgebungsbereich der dem Fahrzeugführer zur Beobachtung angezeigt werden soll, und es werden Bilddaten des Umgebungsbereichs erzeugt. Weiterhin werden mittels wenigstens einer Bildwiedergabeeinrichtung, die im Sichtfeld des Fahrzeugführers angeordnet ist, die von der wenigstens einen Bildaufnahmeeinrichtung erzeugten Bilddaten wiedergegeben.

Dient das erfindungsgemäße Verfahren zur Beobachtung sowohl des linken als auch des rechten Umgebungsbereichs des Fahrzeugs, dann werden insbesondere mittels jeweils auf beiden Fahrzeugseiten angeordneten Bildaufnahmeeinrichtungen Bilddaten der jeweiligen Fahrzeugumgebung erzeugt. Dabei können die auf beiden Fahrzeugseiten angeordneten Bildaufnahmeeinrichtungen mit einer gemeinsamen Bildverarbeitungselektronik verbunden sein, welche die erzeugten Bilddaten verarbeitet und insbesondere die dargestellten Bildausschnitte entsprechend dem erfindungsgemäßen Verfahren anpasst. Die Bilddaten können dann auf separaten oder auf einer gemeinsam genutzten Bildwiedergabeeinrichtung wiedergegeben werden. Um einen ausreichend großen Umgebungsbereich erfassen und Bilddaten aus dem entsprechenden Umgebungsbereich erzeugen zu können, können insbesondere auch mehr als nur eine Bildaufnahmeeinrichtung auf jeder Fahrzeugseite angeordnet sein. Dabei können die von den mehreren Bildaufnahmeeinrichtungen erzeugten Bilddaten zu einem Gesamtbild des jeweiligen Umgebungsbereichs zusammengesetzt werden. Weiterhin können beispielsweise auch die Bilddaten von seitlich am Fahrzeug angeordneten Bildaufnahmeeinrichtungen mit Bilddaten einer heckseitig am Fahrzeug angeordneten Bildaufnahmeeinrichtung zu einem Gesamtbild zusammengesetzt werden.

Erfindungsgemäß wird der bei der Wiedergabe der Bilddaten dargestellten Bildausschnitt des Umgebungsbereichs in Abhängigkeit einer ermittelten Ausrichtung eines Anhängers des Fahrzeugs angepasst. Unter der Anpassung des Bildausschnitts kann dabei insbesondere die Auswahl oder Änderung eines Ausschnitts bzw. eines Teilbereichs eines mittels der Bildaufnahmeeinrichtung erfassten bzw. erzeugten Gesamtbildes des Umgebungsbereichs verstanden werden. Die Auswahl bzw. die Änderung erfolgt dabei vorzugsweise derart, dass der Fahrzeugführer auch bei unterschiedlichen Ausrichtungen des Anhängers den seitlich und rückwärtig vom Fahrzeug und Anhänger befindlichen Umgebungsbereich beobachten kann, insbesondere derart, dass der im dargestellten Bildausschnitt angezeigte Umgebungsbereich möglichst nicht oder möglichst wenig durch den Anhänger des Fahrzeugs verdeckt ist.

Bei der Ausrichtung des Anhängers handelt es sich vorzugsweise um die Lage des Anhängers relativ zum Fahrzeug. Dabei kann insbesondere der Winkel der Längsachse des Anhängers zur Längsachse des Fahrzeugs ermittelt werden, d.h. der Knickwinkel der Anhängerlängsachse zur Fahrzeuglängsachse. Optional kann anhand des Winkels und anhand bekannter oder ermittelter Länge und/oder Breite des Anhängers dessen genaue Lage und Position zum Fahrzeug bestimmt werden.

Die Ermittlung der Ausrichtung des Anhängers und die Anpassung des dargestellten Bildausschnitts erfolgen vorzugsweise fortlaufend während der Fahrt und/oder zumindest in bestimmten Fahrsituationen, beispielsweise beim Rückwärtsfahren, Einparken und/oder bei einem Spurwechsel oder Überholmanöver.

Die Ausrichtung bzw. der Winkel des Anhängers zum Fahrzeug kann beispielsweise in Grad (°) ausgehend vom Ausgangszustand bei Geradeausfahrt angegeben werden. Bei Geradeausfahrt beträgt der Knickwinkel zwischen den Längsachsen von Fahrzeug und Anhänger, d.h. der Winkel zwischen den Achsen gemessen um deren Drehpunkt, 180°. Mit zunehmend engem Kurvenradius wird der Knickwinkel kleiner.

Im Rahmen des erfindungsgemäßen Verfahrens erfolgt die Anpassung des bei der Wiedergabe der Bilddaten dargestellten Bildausschnittes derart, dass ein dargestellter Abbildungsmaßstab in Abhängigkeit der ermittelten Ausrichtung des Anhängers angepasst bzw. verändert wird. Unter dem dargestellten Abbildungsmaßstab kann insbesondere das ZoomVerhältnis bzw. der Zoomfaktor der Darstellung des Umgebungsbereichs verstanden werden. Dabei kann beispielsweise bei engen Kurvenradien, d.h. bei kleinem Knickwinkel zwischen Fahrzeug- und Anhängerlängsachse, bei welchem auf einer Seite des Fahrzeugs ein Großteil des Umgebungsbereichs durch den Anhänger verdeckt ist, ein kleinerer Abbildungsmaßstab gewählt werden, d.h. es kann aus dem Bild herausgezoomt werden, um dem Fahrzeugführer ein besseres bzw. umfassenderes Bild des Bereichs um den Anhänger zu liefern. Es kann insbesondere bei kleiner werdendem Knickwinkel ein zunehmend verringerter Abbildungsmaßstab gewählt werden, beispielsweise in den Schritten 1:9, 1:10, 1:11 usw., d.h. es kann umso weiter aus der Darstellung des Umgebungsbereichs herausgezoomt werden, je enger eine Kurve ist, um den Fahrzeugführer weiterhin einen ausreichenden Überblick über den Umgebungsbereich des Fahrzeugs zu liefern.

Weiterhin erfolgt im Rahmen des erfindungsgemäßen Verfahrens vorzugsweise eine Anpassung einer Bildauflösung in Abhängigkeit der ermittelten Ausrichtung des Anhängers. Dabei kann sowohl die Auflösung, mittels der die Bildaufnahmeeinrichtung die Bilddaten des seitlichen und/oder rückwärtigen Umgebungsbereichs erfasst und erzeugt, und/oder es kann die Auflösung, in der die Darstellung der Bilddaten bzw. des gewählten Bildausschnitts mittels der Bildwiedergabeeinrichtung erfolgt, in Abhängigkeit der ermittelten Ausrichtung des Anhängers angepasst werden. Die Anpassung der Bildauflösung kann dabei insbesondere auch in Abhängigkeit der vorangehend beschriebenen Anpassung des Abbildungsmaßstabs erfolgen.

Gemäß einer besonderen Ausgestaltung des erfindungsgemäßen Verfahrens kann die Anpassung, des bei der Wiedergabe der Bilddaten dargestellten Bildausschnittes, insbesondere derart erfolgen, dass bei erkannter Rückwärtsfahrt der Abbildungsmaßstab vergrößert wird und der dargestellte Bildausschnitt in Abhängigkeit der Ausrichtung des Anhängers derart angepasst wird, dass der dargestellte Bildausschnitt immer zumindest ein hinteres Ende des Anhängers zeigt. Dabei erfolgt die Anpassung ferner bevorzugt derart, dass sich der Anhänger bzw. das hintere Ende des Anhängers, in dem auf der Bildwiedergabeeinrichtung dargestellten Bildausschnitt, nur in einem definierten Randbereich befindet. Diese Ausgestaltung des erfindungsgemäßen Verfahrens dient insbesondere dazu, dass der Fahrzeugführer bei Rückwärtsfahrt, beispielsweise beim Einparken oder Rückwärtsrangieren mit Anhänger, einen auf das hintere Ende des Anhängers ausgerichtete Darstellung des Umgebungsbereichs erhält, damit er Objekte bzw. Hindernisse, die sich in unmittelbarer Nähe befinden, besser erkennen und den Abstand der Objekte zum Anhänger besser einschätzen kann. Dabei wird vorzugsweise ein Randbereich des gesamten Bilddarstellungsbereichs der Bildwiedergabeeinrichtung definiert, in welcher der Anhänger bzw. das hintere Ende des Anhängers angezeigt wird, wobei der restliche Bilddarstellungsbereich vorzugsweise nicht durch den Anhänger verdeckt ist, sondern den interessierenden und seitlich neben dem Anhänger befindlichen Bereich der Fahrzeugumgebung zeigt.

Zur Bestimmung der Ausrichtung des Anhängers, kann der Winkel des Anhängers, insbesondere des Knickwinkels der Anhängerlängsachse zur Fahrzeuglängsachse, mittels einer oder mehrerer mechanischer und/oder elektromechanischer Vorrichtungen zur Winkelmessung erfolgen, die in einer Anhängerkupplung des Fahrzeugs angeordnet sind. Derartige Vorrichtungen sind dem Fachmann grundsätzlich bekannt, beispielsweise aus der DE 10 2005 045 195 A1.

Alternativ oder zusätzlich kann es sich bei den Mitteln zur Bestimmung der Ausrichtung des Anhängers auch um elektronische Bildverarbeitungseinrichtungen handelt, die beispielsweise zur Bestimmung des Winkels des Anhängers mittels Bildverarbeitung der mittels der Bildaufnahmeeinrichtung erzeugten Bilddaten ausgebildet sind. Methoden zur Bestimmung des Winkels eines Anhängers mittels Bildverarbeitung, insbesondere des Knickwinkels der Anhängerlängsachse zur Fahrzeuglängsachse, sind dem Fachmann grundsätzlich bekannt, beispielsweise aus der DE 10 2011 113 197 A1.

Die erfindungsgemäße Vorrichtung dient zur Erfassung und Wiedergabe eines seitlichen Umgebungsbereichs eines Fahrzeugs und insbesondere einem Fahrzeugführer eines Fahrzeugs zur Beobachtung des entsprechenden Umgebungsbereichs. Die Vorrichtung ist dabei vorzugsweise zur Umsetzung des vorangehend beschriebenen Verfahrens ausgebildet.

Hierzu umfasst die Vorrichtung wenigstens eine Bildaufnahmeeinrichtung, die zur Erfassung des entsprechenden Umgebungsbereichs und zur Erzeugung von Bilddaten des Umgebungsbereichs ausgebildet ist. Bei der wenigstens einen Bildaufnahmeeinrichtung handelt es sich beispielsweise um eine Kamera, die im Außenbereich des Fahrzeugs angeordnet und auf den entsprechenden Umgebungsbereich ausgerichtet ist.

Die erfindungsgemäße Vorrichtung umfasst weiterhin wenigstens eine Bildwiedergabeeinrichtung, die im Sichtfeld des Fahrzeugführers angeordnet und zur Wiedergabe der von der Bildaufnahmeeinrichtung erzeugten Bilddaten ausgebildet ist. Bei der wenigstens einen Bildwiedergabeeinrichtung handelt es sich vorzugsweise um eine elektronisches Display bzw. einen Anzeigebildschirm, der im Innenraum des Fahrzeugs, beispielsweise auf der linken oder rechten Seite im Bereich der A-Säule, angeordnet ist.

Die wenigstens eine Bildaufnahmeeinrichtung und die wenigstens eine Bildwiedergabeeinrichtung können über eine kabellose oder kabelgebundene Datenverbindung miteinander verbunden sein, insbesondere zur Übertragung der Bilddaten von der Bildaufnahmeeinrichtung zur Bildwiedergabeeinrichtung.

Die erfindungsgemäße Vorrichtung umfasst ferner Mittel, die zur Anpassung eines bei der Wiedergabe der Bilddaten dargestellten Bildausschnittes ausgebildet sind. Unter der Wiedergabe der Bilddaten ist insbesondere die Darstellung der Bilddaten auf der Bildwiedergabeeinrichtung zu verstehen. Bei den Mitteln zur Anpassung des dargestellten Bildausschnitts kann es sich insbesondere um elektronische Bildverarbeitungseinrichtungen handeln, die in die Bildaufnahme- und/oder Bildwiedergabeeinrichtung integriert sind. Die Mittel zur Anpassung, des bei der Wiedergabe der Bilddaten dargestellten Bildausschnittes, können insbesondere auch als zusätzliches Steuergerät (ECU) ausgebildet sein und zwischen der Bildaufnahme- und der Bildwiedergabeeinrichtung zwischengeschaltet sein. Insbesondere bei Verwendung der erfindungsgemäßen Vorrichtung zur Beobachtung sowohl des linken als auch des rechten Umgebungsbereichs des Fahrzeugs und bei Anordnung von Bildaufnahmeeinrichtungen sowohl auf der linken als auch auf der rechten Seite des Fahrzeugs, können die von den Bildaufnahmeeinrichtungen erzeugten Bilddaten mittels gemeinsam genutzter Bildverarbeitungseinrichtungen verarbeitet werden. Hierzu können die Bilderfassungseinrichtungen mit denselben elektronischen Bildverarbeitungseinrichtungen, beispielsweise mit einem zentralen Steuergerät (ECU}, verbunden sein.

Erfindungsgemäß umfasst die Vorrichtung ferner Mittel, die zur Ermittlung einer Ausrichtung eines Anhängers des Fahrzeugs ausgebildet sind. Bei den Mitteln zur Bestimmung der Ausrichtung des Anhängers kann es sich beispielsweise um einen oder mehrere bekannte mechanische und/oder elektromechanische Vorrichtungen zur Winkelmessung handeln, die in einer Anhängerkupplung des Fahrzeugs angeordnet sind, und/oder um elektronische Bildverarbeitungseinrichtungen, die zur Bestimmung des Winkels des Anhängers, z.B. mittels bekannter Bildverarbeitungsverfahren der mittels der Bildaufnahmeeinrichtung erzeugten Bilddaten, ausgebildet sind.

Erfindungsgemäß ist der bei der Wiedergabe der Bild-daten dargestellte Bildausschnitt des Umgebungsbereichs in Abhängigkeit der ermittelten Ausrichtung des Anhängers anpassbar. Erfindungsgemäß sind die Mittel zur Anpassung des dargestellten Bildausschnittes des Umgebungsbereichs derart ausgebildet, dass eine Anpassung eines dargestellten Abbildungsmaßstabs in Abhängigkeit der Ausrichtung des Anhängers erfolgt.

Gemäß einer weiteren bevorzugten Ausgestaltung der erfindungsgemäßen Vorrichtung sind die Mittel zur Anpassung des dargestellten Bildausschnittes des Umgebungsbereichs derart ausgebildet, dass eine Anpassung einer Bildauflösung in Abhängigkeit der Ausrichtung des Anhängers erfolgt.

Gemäß einer weiteren bevorzugten Ausgestaltung der erfindungsgemäßen Vorrichtung sind die Mittel zur Anpassung, des bei der Wiedergabe der Bilddaten dargestellten Bildausschnittes, derart ausgebildet, insbesondere bei erkannter Rückwärtsfahrt, dass sich der Anhänger und/oder ein hinteres Ende des Anhängers in dem dargestellten Bildausschnitt nur in einem definierten Randbereich befindet. Dabei sind die Mittel zur Anpassung des dargestellten

Bildausschnitts vorzugweise derart ausgebildet, dass der Abbildungsmaßstab bei erkannter Rückwärtsfahrt vergrößert wird.

Die Erfindung betrifft ferner ein Fahrzeug, in eine Vorrichtung entsprechend einer der vorangehend beschrieben Ausgestaltungen angeordnet ist.

Weitere Vorteile sowie optionale Ausgestaltungen gehen aus den nachfolgend beschrieben Ausführungsbeispielen und den dazugehörigen Zeichnungen hervor. Die Ausführungsbeispiele sind in den Zeichnungen vereinfacht dargestellt und in der nachfolgenden Beschreibung näher erläutert.

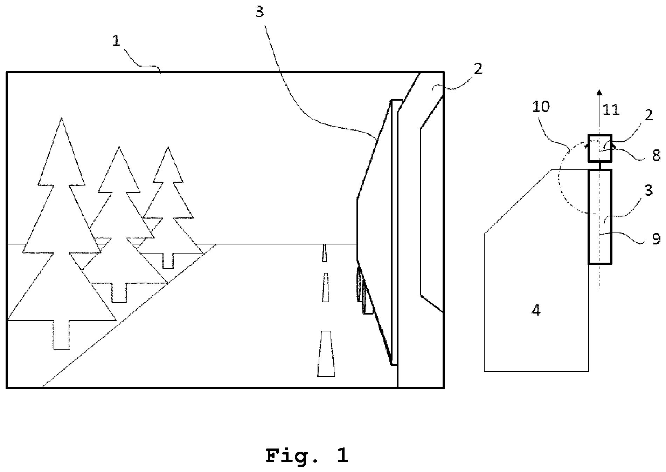

Die Figuren 1 bis 3 zeigen schematisch das Funktionsprinzip des erfindungsgemäßen Verfahrens. Die Figuren zeigen dabei jeweils die Wiedergabe eines Bildausschnitts 1 des seitlichen rückwärtigen Umgebungsbereiches 4 eines Fahrzeugs 2, bei unterschiedlicher Fahrtrichtung 11 und bei unterschiedlicher Ausrichtung eines am Fahrzeug 2 angeordneten Anhängers 3. In diesem Fall handelt es sich bei dem Fahrzeug 2 um einen Lastkraftwagen mit Anhänger 3 und bei dem erfassten und wiedergegebenen Umgebungsbereich 4 um die auf der linken Seite des Fahrzeugs 2 befindliche seitliche und rückwärtige Fahrzeugumgebung.

Bei dem dargestellten bzw. wiedergegebenen Bildausschnitt 1 handelt es sich erfindungsgemäß um einen aus Bilddaten ausgewählten Bildausschnitt der Fahrzeugumgebung, wobei die Bilddaten mittels wenigstens einer am Fahrzeug 2 angeordneten Bildaufnahmeeinrichtung erfasst bzw. erzeugt werden. Die Bildaufnahmeeinrichtung, insbesondere eine Kamera, kann beispielsweise so am Fahrzeug 2 angeordnet und ausgerichtet sein, dass diese einen bestimmten Umgebungsbereich 4 auf der linken Seite neben dem Fahrzeug 2 abdeckt. Erfindungsgemäß können auch mehr als nur eine Bildaufnahmeeinrichtung am Fahrzeug 2 angeordnet sein, um den entsprechen Umgebungsbereich 4 zu erfassen und Bilddaten des Umgebungsbereichs 4 zu erzeugen.

Die Wiedergabe der Bilddaten bzw. des Bildausschnitts 1 erfolgt erfindungsgemäß mittels wenigstens einer Bildwiedergabeeinrichtung, die beispielsweise im Fahrzeuginnenraum und im Sichtbereich des Fahrzeugführers angeordnet ist. Die Bildaufnahmeeinrichtung kann dabei direkt mit der Bildwiedergabeeinrichtung verbunden sein oder es können noch weitere bildverarbeitende elektronische Einrichtungen zwischen der Bildaufnahme- und der Bildwiedergabeeinrichtung zwischengeschaltet sein, insbesondere Bildverarbeitungseinrichtungen, die zur erfindungsgemäßen Anpassung des auf der wenigstens einen Bildwiedergabeeinrichtung dargestellten Bildausschnitts 1 ausgebildet sind.

Erfindungsgemäß erfolgt bei der Wiedergabe der von der einen oder den mehreren Bildaufnahmeeinrichtungen erzeugten Bilddaten eine Anpassung des dargestellten Bildausschnitts 1 in Abhängigkeit einer ermittelten Ausrichtung des Anhängers 3 des Fahrzeugs 2.

Unter der Ausrichtung des Anhängers 3 kann dabei insbesondere die Position und/oder die Lage des Anhängers 3 relativ zum Fahrzeug 2 verstanden werden. Die Ausrichtung kann beispielsweise anhand des Winkels 10 der Längsachse 9 des Anhängers 3 zur Längsachse 8 des Fahrzeugs 2 ermittelt werden, insbesondere anhand des Knickwinkels 10 der Achsen 8,9 zueinander. Weiterhin kann die Ausrichtung des Anhängers 3, insbesondere bei bekanntem bzw. ermitteltem Winkel 10 der Längsachsen 8,9 zueinander, zudem anhand einer bekannten Länge und/oder Breite des Anhängers 3 bestimmt werden.

Die Anpassung des dargestellten Bildausschnitts 1 erfolgt dabei in Abhängigkeit der ermittelten Ausrichtung des Anhängers 3 vorzugsweise derart, dass die Fahrzeugumgebung in dem bei der Wiedergabe der Bilddaten dargestellten Bildausschnitt 1 nicht oder möglichst wenig durch den Anhänger 3 verdeckt ist und/oder dass eine Beobachtung der Umgebungsbereichs 4 durch den Fahrzeugführer auch bei unterschiedlichen Ausrichtungen des Anhängers 3 jederzeit möglich ist.

Erfindungsgemäß wird bei der Anpassung des dargestellten Bildausschnitts 1 in Abhängigkeit der ermittelten Ausrichtung des Anhängers 3 ein dargestellter Abbildungsmaßstab verändert. Die Veränderung des Abbildungsmaßstabes eines digitalen Bildes wird bekanntermaßen auch als Zoom-Funktion bezeichnet werden. Im Rahmen der Erfindung wird der Abbildungsmaßstab dabei derart verändert, dass je nach ermittelter Ausrichtung des Anhängers 3 in das Gesamtbild bzw. in den Bildausschnitt 1 hinein bzw. aus dem Bild hinaus gezoomt wird, d.h. der Abbildungsmaßstab bzw. der Zoomfaktor wird vergrößert bzw. verkleinert, um jeweils eine möglichst gute Darstellung der Fahrzeugumgebung zu erhalten und dem Fahrzeugführer damit die Beobachtung des Umgebungsbereichs 4 zu ermöglichen.

Ferner kann im Rahmen der Erfindung, bei der Anpassung des dargestellten Bildausschnitts 1 in Abhängigkeit der ermittelten Ausrichtung des Anhängers 3, die Bildauflösung verändert werden. Die Bildauflösung kann dabei insbesondere bereits bei der Erzeugung der Bilddaten mittels der wenigstens einen Bildaufnahmeeinrichtung und/oder bei der Wiedergabe der Bilddaten bzw. des gewählten Bildausschnitts 1 mittels der wenigstens einen Bildwiedergabeeinrichtung angepasst bzw. verändert werden. Im Rahmen der Erfindung kann die Bildauflösung dabei derart verändert werden, dass je nach ermittelter Ausrichtung des Anhängers 3 die Bildauflösung erhöht und oder verringert wird, um jeweils eine möglichst gute Darstellung der Fahrzeugumgebung zu erhalten und dem Fahrzeugführer damit die Beobachtung des Umgebungsbereichs 4 zu ermöglichen. Die Bildauflösung kann dabei insbesondere an den bei der Anpassung des dargestellten Bildausschnittes 1 geänderten Abbildungsmaßstab angepasst werden.

Die Figuren 1 bis 3 veranschaulichen beispielhaft das erfindungsgemäße Verfahren der Anpassung des dargestellten Bildausschnittes 1 in Abhängigkeit der Ausrichtung des Anhängers 3 des Fahrzeugs 2.

In Fig. 1, beispielsweise bei Geradeausfahrt 11, ist der Anhänger 3 derart zum Fahrzeug 2 ausgerichtet, dass der Winkel 10 zwischen der Fahrzeuglängsachse 8 und der Anhängerlängsachse 9, d.h. der Knickwinkel 10 der Achsen 8,9 gemessen um deren Drehpunkt, 180° beträgt. Der Bildausschnitt 1 ist in diesem Fall derart angepasst bzw. gewählt, dass der dargestellte Bildausschnitt 1 im Wesentlichen der Ansicht der Fahrzeugumgebung entspricht, die ein Fahrzeugführer über die bislang serienmäßig in Fahrzeugen eingesetzten Seitenspiegel erhält, insbesondere derart, dass ein Teil des Fahrzeugs 2 und des Anhängers 3 nur am Rand des Bildausschnitts 1 zu sehen ist und dass der Fahrzeugführer ansonsten einen Blick auf die benachbarte Fahrspur erhält.

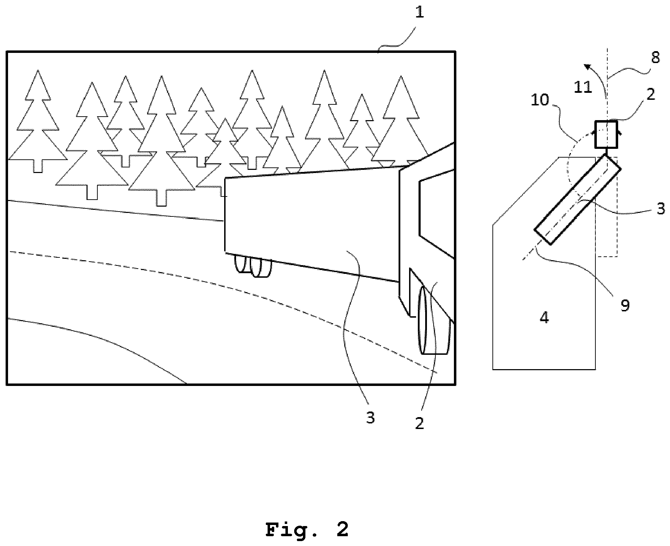

In Fig. 2, beispielsweise bei einem Abbiegemanöver bzw. bei Kurvenfahrt 11, fährt das Fahrzeug 2 eine Linkskurve, wodurch sich die Ausrichtung des Anhängers 3 zum Fahrzeug 2 gegenüber der Geradeausfahrt auf Fig. 1 verändert. Im dargestellten Fall beträgt der Knickwinkel 10 zwischen Fahrzeuglängsachse 8 und Anhängerlängsachse 9 etwa 135°. Würde der bei der Wiedergabe der Bilddaten dargestellte Bildausschnitt 1 nicht an diese veränderte Ausrichtung des Anhängers 3 angepasst werden, wäre die Sicht des Fahrzeugführers auf den Umgebungsbereich 4 des Fahrzeugs 2 durch die seitliche Front des Anhängers 3 im dargestellten Bildausschnitt 1 weitgehend verdeckt. Erfindungsgemäß wird daher, wie in Fig. 2 gezeigt, der dargestellte Bildausschnitt 1 in Abhängigkeit der ermittelten Ausrichtung des Anhängers 3 angepasst. In diesem Fall ist der Abbildungsmaßstab gegenüber der Darstellung bei Fig. 1 verringert, d.h. es wird aus dem Bild herausgezoomt. Dadurch ist die Fahrzeugumgebung, insbesondere der erfasste Umgebungsbereich 4, besser für den Fahrzeugführer einsehbar. Im Rahmen des erfindungsgemäßen Verfahrens kann es insbesondere vorgesehen sein, dass der Abbildungsmaßstab bzw. der Zoomfaktor bei zunehmend engem Kurvenradius, d.h. bei kleiner werdendem Knickwinkel 10, zunehmend verringert wird. Weiterhin kann entsprechend die Bildauflösung der Darstellung verändert werden.

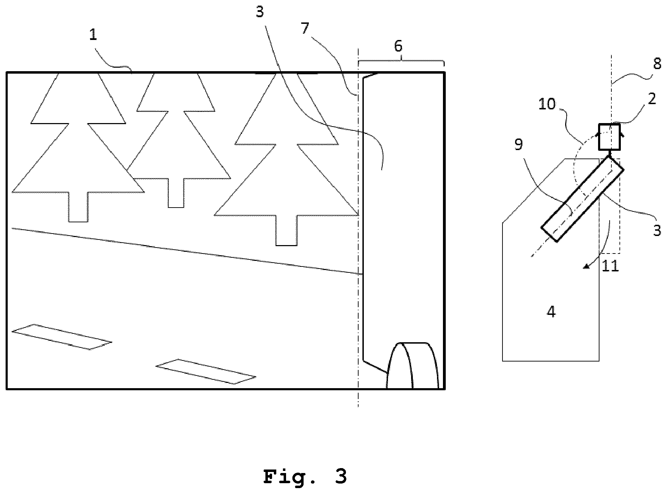

Fig. 3 zeigt eine besondere Ausgestaltung des erfindungsgemäßen Verfahrens bei erkannter Rückwärtsfahrt 11, beispielsweise bei einem Rangier- oder Einparkmanöver.
In diesem Fall fährt das Fahrzeug 2 rückwärts in einer Linkskurve 11, wodurch sich die Ausrichtung des Anhängers 3 zum Fahrzeug 2 gegenüber der Geradeausfahrt (Fig. 1) verändert. Bei dem in Fig. 3 dargestellten Fall beträgtder Knickwinkel 10 zwischen Fahrzeuglängsachse 8 und Anhängerlängsachse 9 etwa 135°. Erfindungsgemäß kann in diesem Fall, d.h. bei erkannter Rückwärtsfahrt 11 und in Abhängigkeit des Winkels 10, der Abbildungsmaßstab vergrößert und der dargestellte Bildausschnitt 1 derart angepasst werden, dass der Anhänger 3 bzw. das hintere Ende 5 des Anhängers 3 vorzugsweise nur in dem definierten Randbereich 6 des dargestellten Bildausschnitts 1 angezeigt wird. Der Bildausschnitt 1 wird somit derart gewählt, dass sich der Anhänger 3 bzw. das hintere Ende 5 des Anhängers nur in dem definierten Randbereich 6 des gesamten Bildausschnitts 1 befindet. Diese Anpassung kann zum Einen durch die bereits beschriebe Anpassung des Abbildungsmaßstabes erreicht werden und zum Anderen dadurch, dass nicht das gesamte erfasste Bild des Umgebungsbereichs 4 angezeigt wird, sondern dass nur ein bestimmter Bildausschnitt 1 aus den erfassten Bilddaten ausgewählt wird. Diese besondere Ausgestaltung des erfindungsgemäßen Verfahrens dient insbesondere dazu, dass der Fahrzeugführer bei Rückwärtsfahrt 11, beispielsweise beim Einparken oder Rückwärtsrangieren, eine auf das hintere Ende 5 des Anhängers 3 ausgerichtete Darstellung des Umgebungsbereichs 4 erhält, damit er Objekte bzw. Hindernisse, die sich in unmittelbarer Nähe des Anhängers 3 befinden, besser erkennen und den Abstand der Objekte zum Anhänger 3 beim Rangieren besser einschätzen kann.

Im Rahmen der Erfindung ist es insbesondere vorgesehen, dass die Ausrichtung des Anhängers 3 zum Fahrzeug 2, insbesondere dessen Knickwinkel 10, direkt mittels Bildverarbeitung erkannt wird. Dabei kann mittels Bildverarbeitung, der mittels der wenigstens einen Bildaufnahmeeinrichtung erzeugten Bilddaten, der Anhänger 3 des Fahrzeugs 2 direkt im Bild erkannt werden und es kann bei einer ermittelten Veränderung der Ausrichtung bzw. Position des Anhängers 3 im Bild, der dargestellte Bildausschnitt 1 direkt und automatisch an die so ermittelte veränderte Ausrichtung des Anhängers 3 angepasst werden. Dabei kann weiterhin vorgesehen sein, dass das hintere Ende 5 des Anhängers 3 mittels Bildverarbeitung ermittelt und der dargestellte Bildausschnitt 1 kontinuierlich derart angepasst wird, so dass, wie im Beispiel entsprechend Fig. 2 gezeigt, die Fahrzeugumgebung im dargestellten Bildausschnitt 1 nicht durch Fahrzeuganhänger 3 verdeckt wird und/oder dass, wie in Fig. 3 gezeigt, das hintere Ende 5 des Anhängers 3 beispielsweise immer nur in einem definierten Bereich 6 des Bildausschnittes 1 zu sehen ist bzw. dass der Anhänger 3 nur höchstens bis zu einer definierten Grenze 7 des Randbereichs 6 in die Darstellung bzw. Wiedergabe der Umgebungsbereichs 4 hineinragt.

### Bezeichnungsliste

- 1: Bildausschnitt
- 2: Fahrzeug
- 3: Anhänger
- 4: Umgebungsbereich
- 5: Hinteres Ende des Anhängers
- 6: Randbereich
- 7: Grenze des Randbereichs
- 8: Fahrzeuglängsachse
- 9: Anhängerlängsachse
- 10: Knickwinkel
- 11: Fahrtrichtung

## Patentansprüche

1. **Verfahren** für ein Spiegelersatzsystem zur Wiedergabe eines seitlichen und/oder rückwärtigen Umgebungsbereichs (4) eines Fahrzeugs (2), zur Beobachtung des Umgebungsbereichs (4) durch einen Fahrzeugführer, wobei
- mittels wenigstens einer Bildaufnahmeeinrichtung der Umgebungsbereich (4) erfasst und Bilddaten des Umgebungsbereichs (4) erzeugt werden, und wobei
- mittels wenigstens einer im Sichtbereich des Fahrzeugführers angeordneten Bildwiedergabeeinrichtung die von der Bildaufnahmeeinrichtung erzeugten Bilddaten wiedergegen werden, wobei
bei der Wiedergabe der Bilddaten eine Anpassung eines dargestellten Bildausschnitts (1) des Umgebungsbereichs (4) in Abhängigkeit einer ermittelten Ausrichtung eines Anhängers (3) des Fahrzeugs (2) erfolgt, wobei
die Anpassung des dargestellten Bildausschnitts (1) derart erfolgt, dass
- die Fahrzeugumgebung in dem bei der Wiedergabe der Bilddaten dargestellten Bildausschnitt (1) nicht durch den Anhänger (3) verdeckt ist, oder dass
- der Anhänger (3) und/oder ein hinteres Ende (5) des Anhängers (3) nur in einem definierten Randbereich (6) des dargestellten Bildausschnitts (1) angezeigt wird, **dadurch gekennzeichnet, dass** eine Anpassung eines dargestellten Abbildungsmaßstabs in Abhängigkeit der ermittelten Ausrichtung des Anhängers (3) erfolgt, wobei je nach ermittelter Ausrichtung des Anhängers (3) in das Gesamtbild bzw. in den Bildausschnitt hinein bzw. aus dem Bild hinaus gezoomt wird.

2. Verfahren nach Anspruch 1, **dadurch gekennzeichnet, dass** eine Anpassung einer Bildauflösung in Abhängigkeit der ermittelten Ausrichtung des Anhängers (3) erfolgt.

3. Verfahren nach einem der vorangegangenen Ansprüche,
**dadurch gekennzeichnet, dass**
die Ermittlung der Ausrichtung des Anhängers (3)
- mittels einer oder mehrerer mechanischer und/oder elektromechanischer Vorrichtungen zur Winkelmessung, die in einer Anhängerkupplung des Fahrzeugs (2) angeordnet sind, und/oder
- mittels Bildverarbeitung der mittels der Bildaufnahmeeinrichtung erzeugten Bilddaten erfolgt.

4. Vorrichtung als Spiegelersatz zur Erfassung und Wiedergabe eines seitlichen und/oder rückwärtigen Umgebungsbereichs (4) eines Fahrzeugs(2), zur Beobachtung des Umgebungsbereichs (4) durch einen Fahrzeugführer, umfassend
- wenigstens eine Bildaufnahmeeinrichtung, die zur Erfassung des Umgebungsbereichs (4) und zur Erzeugung von Bilddaten des Umgebungsbereichs (4) ausgebildet ist,
- wenigstens eine Bildwiedergabeeinrichtung, die im Sichtfeld eines Fahrzeugführers angeordnet und zur Wiedergabe der von der Bildaufnahmeeinrichtung erzeugten Bilddaten ausgebildet ist, sowie
- Mittel, die zur Anpassung eines bei der Wiedergabe der Bilddaten dargestellten Bildausschnittes (1) des Umgebungsbereichs (4) ausgebildet sind, wobei
- die Vorrichtung ferner Mittel umfasst oder mit Mittel verbunden ist, die zur Ermittlung einer Ausrichtung eines Anhängers (3) des Fahrzeugs (2) ausgebildet sind, und
- der dargestellte Bildausschnitt (1) des Umgebungsbereichs (4) in Abhängigkeit der ermittelten Ausrichtung des Anhängers (3) anpassbar ist,
wobei
die Mittel zur Anpassung des bei der Wiedergabe der Bilddaten dargestellten Bildausschnittes (1) des Umgebungsbereichs (4) derart ausgebildet sind, dass
- die Fahrzeugumgebung in dem bei der Wiedergabe der Bilddaten dargestellten Bildausschnitt (1) nicht durch den Anhänger (3) verdeckt ist, oder dass
- sich der Anhänger (3) und/oder ein hinteres Ende (5) des Anhängers (3) nur in einem definierten Randbereich (6) des dargestellten Bildausschnitts (1) befindet, **dadurch gekennzeichnet, dass** die Mittel zur Anpassung des dargestellten Bildausschnittes (1) zur Anpassung eines dargestellten Abbildungsmaßstabs in Abhängigkeit der Ausrichtung des Anhängers (3) ausgebildet sind, derart dass je nach ermittelter Ausrichtung des Anhängers (3) in das Gesamtbild bzw. in den Bildausschnitt hinein bzw. aus dem Bild hinaus gezoomt wird.

5. Vorrichtung nach Anspruch 4,
**dadurch gekennzeichnet, dass**
die Mittel zur Anpassung des dargestellten Bildausschnittes (1) zur Anpassung einer Bildauflösung in Abhängigkeit der Ausrichtung des Anhängers (3) ausgebildet sind.

6. Vorrichtung nach einem der Ansprüche 4 oder 5,
**dadurch gekennzeichnet, dass**
es sich bei den Mitteln zur Bestimmung der Ausrichtung des Anhängers (3) um einen oder mehrere mechanische und/oder elektromechanische Vorrichtungen zur Winkelmessung handelt, die in einer Anhängerkupplung des Fahrzeugs (2) angeordnet sind.

7. Vorrichtung nach einem der Ansprüche 4 bis 6,
**dadurch gekennzeichnet, dass**
es sich bei den Mitteln zur Bestimmung der Ausrichtung des Anhängers (3) um elektronische Bildverarbeitungseinrichtungen handelt, die zur Bestimmung des Winkels des Anhängers (3) mittels Bildverarbeitung der mittels der Bildaufnahmeeinrichtung erzeugten Bilddaten ausgebildet sind.

8. Fahrzeug (2), in dem eine Vorrichtung nach einem der Ansprüche 4 bis 7 angeordnet ist.

## Claims

1. A method for a mirror replacement system for reproducing a lateral and/or rear surrounding area (4) of a vehicle (2), to enable a vehicle driver to monitor the surrounding area (4), wherein
- the surrounding area (4) is detected and image data of the surrounding area (4) is produced by means of at least one image capturing device, and wherein
- the image data produced by the image capturing device is reproduced by means of at least one image reproducing device arranged in the field of vision of the vehicle driver, wherein during the reproducing of the image data, a represented image section (1) of the surrounding area (4) is adapted dependent on an established alignment of a trailer (3) of the vehicle (2), wherein the represented image section (1) is adapted in such a manner that
- the vehicle surroundings in the represented image section (1) during the reproducing of the image data are not concealed by the trailer (3), or
- the trailer (3) and/or a rear end (5) of the trailer (3) is displayed only in a defined edge area (6) of the represented image section (1),
**characterized in that** a represented reproduction scale is adapted dependent on the established alignment of the trailer (3), wherein, depending on the established alignment of the trailer (3), the system zooms into the entire image or respectively into the image section, or respectively zooms out of the image.

2. The method according to Claim 1, **characterized in that** an image resolution is adapted dependent on the established alignment of the trailer (3).

3. The method according to any one of the preceding claims,
**characterized in that**
the alignment of the trailer (3) is established
- by means of one or more mechanical and/or electromechanical angle measuring devices which are arranged in a trailer coupling of the vehicle (2), and/or
- by means of image processing of the image data produced by means of the image capturing device.

4. A device serving as a mirror replacement for capturing and reproducing a lateral and/or rear surrounding area (4) of a vehicle (2), to enable a vehicle driver to monitor the surrounding area (4), comprising
- at least one image capturing device which is configured to detect the surrounding area (4) and to produce image data of the surrounding area (4),
- at least one image reproducing device which is arranged in the field of vision of a vehicle driver and is configured to reproduce the image data produced by the image capturing device, as well as
- means which are configured to adapt an image section (1) of the surrounding area (4), which is represented during the reproducing of the image data, wherein
- the device further comprises means or is linked to means which are configured to establish an alignment of a trailer (3) of the vehicle (2), and
- the represented image section (1) of the surrounding area (4) can be adapted dependent on the established alignment of the trailer (3),
wherein the means are configured to adapt the image section (1) of the surrounding area (4), which is represented during the reproducing of the image data, in such a manner that
- the vehicle surroundings in the represented image section (1) during the reproducing of the image data are not concealed by the trailer (3), or
- the trailer (3) and/or a rear end (5) of the trailer (3) is displayed only in a defined edge area (6) of the represented image section (1), **characterized in that** the means to adapt the represented image section (1) are configured to adapt a represented reproduction scale dependent on the alignment of the trailer (3) in such a manner that, depending on the established alignment of the trailer (3), the system zooms into the entire image or respectively into the image section, or respectively out of the image.

5. The device according to Claim 4,
**characterized in that**
the means to adapt the represented image section (1) are configured to adapt an image resolution dependent on the alignment of the trailer (3).

6. The device according to any one of Claims 4 or 5,
**characterized in that**
the means for determining the alignment of the trailer (3) are one or more mechanical and/or electromechanical angle measuring devices which are arranged in a trailer coupling of the vehicle (2).

7. The device according to any one of Claims 4 to 6,
**characterized in that**
the means for determining the alignment of the trailer (3) are electronic image processing devices which are configured to determine the angle of the trailer (3) by means of image processing of the image data produced by means of the image capturing device.

8. A vehicle (2), in which a device according to any one of Claims 4 to 7 is arranged.

## Revendications

1. Procédé pour un système de remplacement de rétroviseur pour la reproduction d'une zone environnante (4) latérale et/ou arrière d'un véhicule (2), pour l'observation de la zone environnante (4) par un conducteur de véhicule,
- la zone environnante (4) étant détectée et des données d'images de la zone environnante (4) étant générées au moyen d'au moins un dispositif d'enregistrement d'images, et
- les données d'images générées par le dispositif d'enregistrement d'images étant reproduites au moyen d'au moins un dispositif de reproduction d'images disposé dans le champ de vision du conducteur du véhicule, un ajustement d'une section d'image (1) de la zone environnante (4) représentée étant effectué en fonction d'une orientation d'une remorque (3) du véhicule (2) déterminée, l'ajustement de la section d'image (1) représentée étant effectué de telle sorte que
- l'environnement du véhicule n'est pas recouvert par la remorque (3) dans la section d'image (1) représentée lors de la reproduction des données d'images, ou en ce que
- la remorque (3) et/ou une extrémité arrière (5) de la remorque (3) sont affichées uniquement dans une zone de bord (6) définie de la section d'image (1) représentée, **caractérisé en ce qu'**un ajustement d'une échelle d'image représentée est effectué en fonction de l'orientation de la remorque (3) déterminée, un zoom avant ou arrière sur l'image entière ou sur la section d'image étant effectué en fonction de l'orientation de la remorque (3) déterminée.

2. Procédé selon la revendication 1, **caractérisé en ce qu'**un ajustement d'une résolution d'image est effectué en fonction de l'orientation de la remorque (3) déterminée.

3. Procédé selon l'une quelconque des revendications précédentes,
**caractérisé en ce que**
la détermination de l'orientation de la remorque (3) est effectuée
- au moyen d'un ou plusieurs dispositifs mécaniques et/ou électromécaniques de mesure angulaire, lesquels sont disposés dans un attelage de remorque du véhicule (2), et/ou
- au moyen d'un traitement d'images des données d'images générées par le dispositif d'enregistrement d'images.

4. Dispositif comme remplacement de rétroviseur pour la détection et la reproduction d'une zone environnante (4) latérale et/ou arrière d'un véhicule (2), pour l'observation de la zone environnante (4) par un conducteur de véhicule, comprenant
- au moins un dispositif d'enregistrement d'images, lequel est conçu pour la détection d'une zone environnante (4) et pour la génération de données d'images de la zone environnante (4),
- au moins un dispositif de reproduction d'images disposé dans le champ de vision d'un conducteur de véhicule et conçu pour la reproduction des données d'images générées par le dispositif d'enregistrement d'images, ainsi que
- des moyens conçus pour l'ajustement d'une section d'image (1) de la zone environnante (4) représentée lors de la reproduction des données d'images,
- le dispositif comprenant en outre des moyens ou étant relié à des moyens qui sont conçus pour la détermination d'une orientation d'une remorque (3) du véhicule (2), et
- la section d'image (1) de la zone environnante (4) représentée pouvant être ajustée en fonction de l'orientation de la remorque (3) déterminée,
les moyens pour l'ajustement de la section d'image (1) de la zone environnante (4) représentée lors de la reproduction des données d'images étant conçus de telle sorte que
- l'environnement du véhicule n'est pas recouvert par la remorque (3) dans la section d'image (1) représentée lors de la reproduction des données d'images, ou en ce que
- la remorque (3) et/ou une extrémité arrière (5) de la remorque (3) se trouvent uniquement dans une zone de bord (6) définie de la section d'image (1) représentée, **caractérisé en ce que** les moyens pour l'ajustement de la section d'image (1) représentée sont conçus pour l'ajustement d'une échelle d'image représentée en fonction de l'orientation de la remorque (3), de telle sorte qu'un zoom avant ou arrière sur l'image entière ou sur la section d'image est effectué selon l'orientation de la remorque (3) déterminée.

5. Dispositif selon la revendication 4,
**caractérisé en ce que**
les moyens pour l'ajustement de la section d'image (1) représentée sont conçus pour l'ajustement d'une résolution d'image en fonction de l'orientation de la remorque (3).

6. Dispositif selon l'une des revendications 4 ou 5,
**caractérisé en ce que**
les moyens pour la détermination de l'orientation de la remorque (3) sont un ou plusieurs dispositif(s) mécanique(s) et/ou électromécanique(s) de mesure angulaire, lesquels sont disposés dans un attelage de remorque du véhicule (2).

7. Dispositif selon l'une quelconque des revendications 4 à 6,
**caractérisé en ce que**
les moyens pour la détermination de l'orientation de la remorque (3) sont des dispositifs de traitement des images électroniques, lesquels sont conçus pour la détermination de l'angle de la remorque (3) au moyen du traitement d'images des données d'images générées par le dispositif d'enregistrement d'images.

8. Véhicule (2) dans lequel un dispositif selon l'une quelconque des revendications 4 à 7 est disposé.
